Europäisches Patentamt

European Patent Office

Office européen des brevets

(11) Numéro de publication: **0 249 273**
**A2**

## (12) DEMANDE DE BREVET EUROPEEN

(21) Numéro de dépôt: **87201011.1**

(22) Date de dépôt: **29.05.87**

(51) Int. Cl.⁴: **F42B 35/00** , G01F 23/24

(30) Priorité: **10.06.86 BE 2060990**

(43) Date de publication de la demande:
**16.12.87 Bulletin 87/51**

(84) Etats contractants désignés:
**AT CH DE ES FR GB GR IT LI LU NL SE**

(71) Demandeur: **FABRIQUE NATIONALE HERSTAL en abrégé FN Société Anonyme**

**B-4400 Herstal(BE)**

(72) Inventeur: **Naniot, Jean-Marie rue de la Forêt B-4510 Saive(BE)**

(74) Mandataire: **Donné, Eddy M.F.J.Bockstael Arenbergstraat 13 B-2000 Anvers(BE)**

(54) **Procédé de détection de présence de poudre propulsive, explosive, incendiaire ou similaire dans les munitions et dispositif appliquant ce procédé.**

(57) Procédé de détection de présence de poudre propulsive, explosive, incendiaire ou similaire dans les munitions, caractérisé en ce qu'il consiste à réaliser une mesure électrique au travers de la poudre propulsive (2) contenue dans une douille de munition (1).

## Procédé de détection de présence de poudre propulsive, explosive, incendiaire ou similaire dans les munitions et dispositif appliquant ce procédé.

L'invention concerne un procédé de détection de présence de poudre propulsive, explosive, incendiaire ou similaire dans les munitions. Elle concerne également les dispositifs appliquant ce procédé.

Plus spécialement, l'invention est relative à un tel procédé faisant usage de la conductibilité électrique pour déterminer si la quantité de poudre contenue dans une douille de munition est conforme à la quantité de poudre exigée pour une telle munition.

On connaît à ce jour l'utilisation, dans l'unité de chargement des munitions en vue de détecter la présence d'une quantité suffisante de poudre dans une douille avant l'introduction de la balle dans la douille, d'une tige métallique afin de réaliser un contact mécanique de cette tige avec la poudre.

Ce contact est enregistré par mémoire mécanique ou détecteur magnétique ou optique, déterminant ainsi la hauteur, respectivement la quantité, de poudre contenue dans la douille.

L'un des inconvénients de cette méthode réside dans l'obligation d'utiliser des tiges de diamètre pratiquement égal au diamètre de la bouche de la douille, d'où raclage du produit d'étanchéité placé à l'intérieur de la bouche de la douille.

Un autre inconvénient concerne le fait qu'en raison des cadences de travail élevées, ladite tige de palpage entre en contact brusque avec la poudre propulsive provoquant ainsi l'expulsion de paillettes de poudre sur les machines d'où sérieux risques d'incendie.

Dans le but d'éviter les susdits et d'autres désavantages de détection connus, l'invention vise à faire usage de la conductibilité électrique de la poudre propulsive afin de pouvoir contrôler la présence de poudre dans la douille, notamment par la détection dans la douille, plus spécialement entre deux pièces métalliques, de la poudre propulsive, par mesure électrique.

Selon l'invention le procédé consiste à réaliser une mesure électrique (conductibilité, résistance, capacité) au travers de la poudre propulsive contenue dans une douille de munition.

Une première application de l'invention permettant de détecter la présence et/ou la hauteur de poudre dans une douille de munition consiste à procéder à une mesure électrique entre la paroi de la douille et la tige de palpage ou antenne.

Une deuxième application de l'invention consiste à réaliser une mesure électrique entre deux tiges de palpage introduites dans la douille.

La mesure pouvant être réalisée au moyen de tiges de palpage ou antennes de diamètre relativement petit, par exemple de l'ordre de 1 mm, toute projection de paillettes de poudre au dehors de la douille est ainsi évitée.

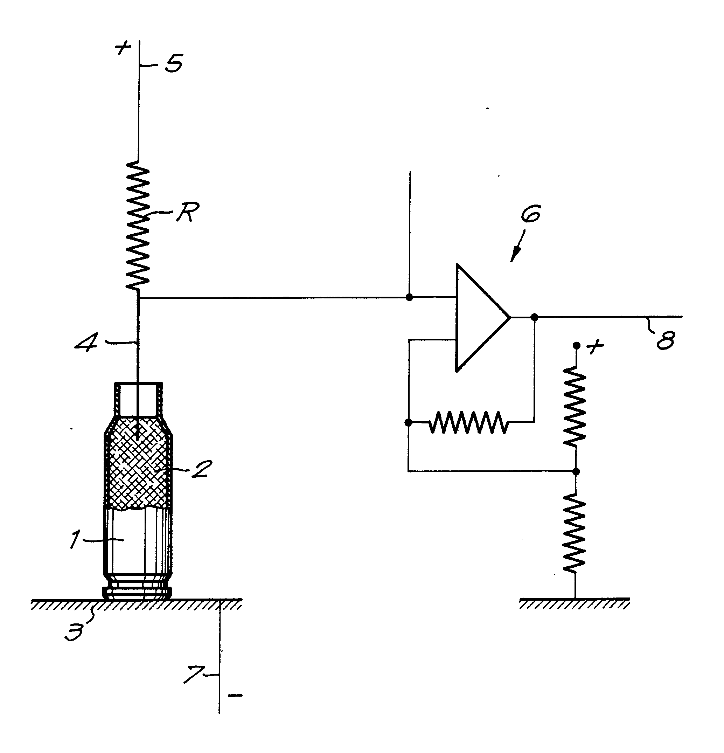

Dans le but de mieux faire comprendre l'invention, une réalisation est décrite ci-après avec référence au dessin annexé.

Ce dernier représente une douille de munition métallique 1 remplie, à hauteur convenable, d'une poudre propulsive 2. Ladite douille 1 est posée sur une partie métallique, par exemple un transporteur 3.

L'invention prévoit une tige de palpage ou antenne 4 dotée d'un mouvement de va-et-vient vertical obtenu d'une manière quelconque, non représentée dans le dessin. Cette tige ou antenne est reliée, par l'intermédiaire d'une résistance R, d'une part, au pôle positif 5 d'une source électrique et, d'autre part, à un amplificateur 6.

La partie métallique 3 supportant les douilles 1 est reliée au pôle négatif 7 de ladite source.

Selon l'invention il est possible de mesurer la présence, respectivement la hauteur, de poudre dans une douille 1 en descendant dans cette dernière, par exemple à la hauteur où devrait être présente la poudre pour pouvoir constituer une charge correcte, ladite antenne 4 laquelle mesure, après contact avec la poudre 2, la résistance électrique entre la paroi de la douille 1 et la tige métallique ou antenne 4.

Cette mesure se traduit par un signal positif à la sortie 8 de l'amplificateur 6b si le contact entre la poudre 2 et l'antenne 4 se réalise.

On obtient ainsi la possibilité de contrôler aisément, avec toute sécurité et à cadence élevée la présence, respectivement la hauteur ou quantité de poudre propulsive contenue dans les douilles de munition.

L'invention n'est nullement limitée à l'exemple décrit précédemment. En effet, au lieu de travailler avec une antenne 4, il est possible de travailler avec deux antennes 4 dont l'une est reliée, par exemple de la manière décrite ci-avant, au pôle 5 et à l'amplificateur 6, le pôle négatif étant relié, dans cette variante, à la deuxième antenne. Dans cette variante la mesure est effectuée entre les deux tiges métalliques au moment où elles viennent en contact avec la poudre 2.

## Revendications

1.-Procédé de détection de présence de poudre propulsive, explosive, incendiaire ou similaire dans les munitions, caractérisé en ce qu'il consiste à réaliser une mesure électrique au travers de la poudre propulsive (2) contenue dans une douille de munition (1).

2.-Procédé selon la revendication 1, caractérisé en ce que la mesure électrique est effectuée entre une tige de palpage ou antenne (4) en contact avec la poudre contenue dans la douille (4) et la paroi de la douille.

3.-Procédé selon la revendication 1, caractérisé en ce que la mesure électrique est effectuée entre deux tiges de palpage ou antennes (4) en contact avec la poudre (2), dans la douille de munition (1).

4.-Procédé selon la revendication 1 ou 2, caractérisé en ce que la tige de palpage ou antenne (4) est connectée, d'une part, à un amplificateur (6) et, par l'intermédiaire d'une résistance R, au pôle positif (5) d'une source électrique, d'autre part, le pôle négatif de cette source électrique étant connecté directement ou indirectement à la douille métallique (1).

5.-Procédé selon la revendication 1 ou 3, caractérisé en ce que la tige de palpage ou antenne (4) est connectée, d'une part, à un amplificateur (6) et, par l'intermédiaire d'une résistance R, au pôle positif (5) d'une source électrique, d'autre part, le pôle négatif de cette source électrique étant connecté à une deuxième tige de palpage ou antenne (4) isolée électriquement par rapport à la première tige (4).

6.-Dispositif appliquant le procédé selon l'une des revendications précédentes, caractérisé en ce que la, respectivement les, tiges de palpage ou antennes (4) sont animées d'un mouvement de va-et-vient vertical permettant d'introduire la ou les tiges de palpage (4) dans les douilles de munition successives, respectivement de les en retirer.

7.-Dispositif selon la revendication 6, caractérisé en ce que la ou les tiges de palpages (4) sont descendues dans les douilles successives (1) jusqu'à la hauteur où devrait être présente la poudre (2) pour avoir une charge correcte.

8.-Dispositif selon la revendication 6 ou 7, caractérisé en ce que le déplacement de va-et-vient de la ou des tige(s) de palpage (4) est légèrement supérieur à la différence entre la hauteur totale de la douille (1) et la hauteur où devrait être présente la poudre (2) pour avoir une charge correcte.

9.-Dispositif selon la revendication 6, 7 ou 8, caractérisé en ce que le diamètre de la tige de palpage (4) est considérablement moindre que celui de la bouche de la douille de munition (1).

10.-Dispositif selon la revendication 9, caractérise en ce que le diamètre d'une tige de palpage (4) est de l'ordre de 1 mm.